# EUROPEAN PATENT SPECIFICATION

(11) **EP 2 296 393 B1**
(45) Date of publication and mention of the grant of the patent: **29.06.2016**
(21) Application number: 09804480.3
(22) Date of filing: 31.07.2009
(51) Int. Cl.: H04B 7/26

(54) **TRANSMISSION METHOD AND DEVICE OF DOWNLINK MULTI-FRAME**
ÜBERTRAGUNGSVERFAHREN UND VORRICHTUNG VON DOWNLINK MEHRFACH-DATENÜBERTRAGUNGSBLOCK
PROCÉDÉ ET DISPOSITIF DE TRANSMISSION DE TRAME MULTIPLE EN LIAISON DESCENDANTE

(30) Priority: 05.08.2008 CN 200810129668
(43) Date of publication of application: 16.03.2011
(60) Divisional application: 16163081.9
(73) Proprietor: Huawei Technologies Co., Ltd., Longgang District Shenzhen, Guangdong 518129 (CN)
(72) Inventor: DONG, Pengpeng, Shenzhen 518129 (CN); MEI, Jingjin, Shenzhen 518129 (CN); XIAO, Jiehua, Shenzhen 518129 (CN)
(74) Representative: Kreuz, Georg Maria
(86) International application number: PCT/CN2009/073011
(87) International publication number: WO 2010/015180

(56) References cited:
- EP-A2- 1 318 634
- WO-A1-02/13416
- WO-A1-2005/053214
- CN-A- 1 446 410
- CN-A- 1 623 288
- CN-A- 1 787 661
- CN-A- 1 883 147
- US-A1- 2006 126 578
- US-B1- 7 133 377
- NOKIA SIEMENS NETWORKS ET AL: "Voice Capacity Evolution", 3GPP DRAFT; GP-071792_VOICE_CAPACITY_EVOLUTION_BY_OSC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071109, 9 November 2007 (2007-11-09), XP050019133, [retrieved on 2007-11-09]
- HUAWEI TECHNOLOGIES CO: "New Strategy on SACCH for Dowlink MUROS", INTERNET CITATION, 25 August 2008 (2008-08-25), pages 1-5, XP002555608, Retrieved from the Internet: URL:http://www.3gpp.org/ftp/tsg_geran/TSG_ GERAN/GERAN_39_Florence/Docs/ [retrieved on 2009-11-17]
- "3rd Generation Partnership Project; Technical Specification Group GERAN; Circuit Switched Voice Capacity Evolution for GSM/EDGE Radio Access Network (GERAN) (Release 8)", 3GPP STANDARD; 3GPP TR 45.914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 May 2009 (2009-05-01), pages 1-256, XP050379320,

## Description

### FILED OF THE INVENTION

The present invention relates to the field of mobile communication technology, and in particular, to a method and a device for transmitting downlink multiframes.

### BACKGROUND OF THE INVENTION

With the increasing number of subscribers, the voice capacity in the mobile communications system, especially for areas or countries with a large population, keeps increasing. Meanwhile, with development of technologies, competition has been intensifying, and the charging fees of voice services are reducing. In this case, to reduce the cost, carriers need to utilize the hardware and frequency spectrum resources more effectively.

For tradition voice services, a timeslot is allocated to only one subscriber. To increase the voice capacity, that is, to enable the same resource to carry voice of more channels, Multi-User Reuse One Slot (MUROS) is adopted. That is, multiple subscribers reuse one timeslot and Absolute Radio Frequency Channel Number (ARFCN). In this way, the capacity on a fixed carrier frequency and frequency spectrum can increase significantly.

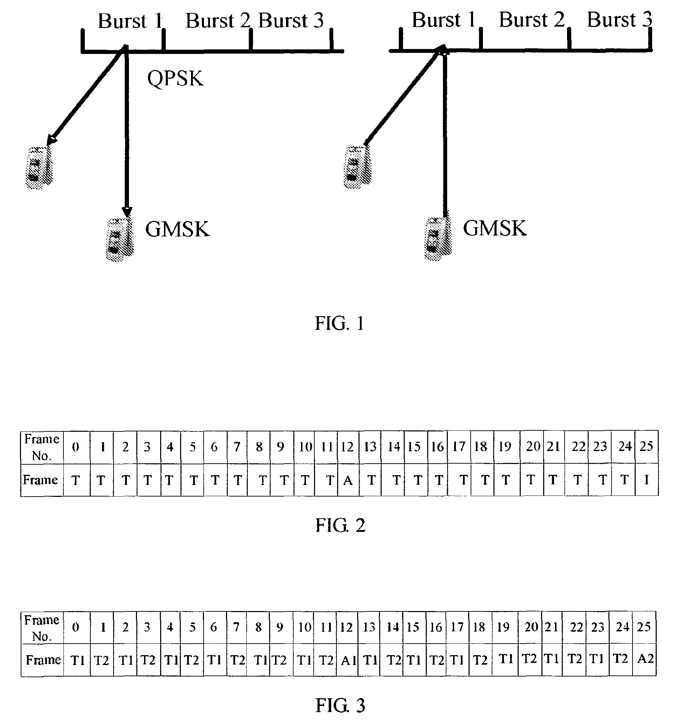

FIG. 1 shows the MUROS solution schematic diagram. The MUROS solution can provide two sub-channels that allow two Mobile Stations (MSs) to work on the same wireless resource. Each MS uses a sub-channel. The two sub-channels are differentiated by the orthogonal or orthogonal-similar training sequences. For the traditional circuit switching (CS) voice services, each burst is used by an MS, and the Gaussian Minimum Shift Keying (GMSK) modulation mode is adopted for both downlink and uplink transmission. In the downlink direction, the base station sends two-channel GMSK signals, which generate quasi-Quadrature Phase-Shift Keying (QPSK) signals. The receiving end removes the irrelevant signal as interference signal by using the orthogonal training sequence and enhanced interference elimination technology, and obtains its own signal. In the uplink direction, the two MSs still transmits packets through the same timeslot using the GMSK modulation mode. The base station demodulates the two-channel multiplex signals using the Successive Interface Cancellation (SIC) or Joint Detection (JD) method and differentiates the two subscribers with different Training Sequence Codes (TSCs).

Each Time Division Multiple Access (TDMA) frame includes eight basic timeslots. Each timeslot is a basic physical channel and includes 156.25 code cells. The 156.25 code cells representing 156.25 bits for the ordinary burst sequence. Multiple TDMA frames constitute a multiframe. When different logical channels are mapped onto a physical channel, the multiframes are required. The duration of a multiframe comprising 26 frames is 120 ms; this multiframe is used for the service channel and Slow Associated Control Channel (SACCH). An SACCH refers to a slow control channel associated with the Traffic Channel (TCH) and is used to transmit slow signaling, such as time advance and power control during a conversation. Among the 26 frames, 24 burst sequences are used for services, and 2 burst sequences are used for signaling.

FIG 2 shows a structure of a 26-frame multiframe when one subscriber uses a full-rate channel. In the figure, the 24 frames (frames 0 to 11 and 13 to 24) are TCH frames, identified by T; frame 12 is an SACCH frame, identified by A; frame 25 is an idle frame, identified by I.

FIG 3 shows a structure of a 26-frame multiframe when each of two subscribers uses a half-rate channel. In the figure, the 24 frames (frames 0 to 11 and 13 to 24) are TCH frames, and frames 12 and 25 are SACCH frames. The two SACCH frames are used by the two subscribers respectively. In FIG. 3, T1 is the TCH frame of subscriber 1; T2 is the TCH frame of subscriber 2; A1 is the SACCH frame of subscriber 1; A2 is the SACCH frame of subscriber 2.

EP1318634A2 discloses a communication system comprising a first station capable of communication with a second station over a wireless channel, data being carried over the wireless channel in superframes, each superframe comprising a plurality of frames and each frame comprising a plurality of timeslots, the system having a mode of operation in which a data channel for circuit switched communications is defined by the allocation to that channel of corresponding time slots of some of the frames of each superframe, and a data channel for packet switched communications is defined by the allocation to that channel of corresponding time slots of other of the frame of each superframe. EP1318634A2 also discloses a circuit switched network wherein two or four mobile stations are time division multiplexed and the two or four mobile stations use half or quarter rate encoding respectively. In the former case each half rate channel is provided from its own respective multiframe. In the latter, the two consecutive downlink multiframes are needed for complete transmission.

WO02/13416A1 relates to a method for the transmission of data between a number of user stations (MS1, MS2), using a common timeslot of a series of frames and a base station (BS1). The base station (BS1) transmits user data destined for a first of the user stations (MS1) and control information for a second user station (MS2) in a given timeslot, whereby the control information is encoded with a stronger error protection than the user data. A radio signal emitted in the given timeslot directed at the first user station (MS1) is superimposed with a second radio signal, the transmission power of which is sufficient to reach in the direction of the second user station (MS2), in order to permit a precise reception of the control information. The second signal can either be multiplexed or not. The method of transmission is directed towards networks in which data is packet-switched.

The prior art has the following disadvantages:

When the frames of two subscribers multiplex in a half-rate channel, it indicates that the frames of four subscribers are multiplexed in a full-rate channel. The 26-frame multiframe can include only two SACCH frames. This cannot meet the requirements for the SACCH frames of four subscribers. Therefore, the current solution for downlink multiframe transmission cannot meet the requirements for downlink SACCH frames transmission.

### SUMMARY OF THE INVENTION

A method, a device, and a system for transmitting downlink multiframe are provided in the present invention to solve the problem wherein the current solution cannot meet the requirements for SACCH frames transmission when MUROS multiplexing is performed in the half-rate channel.

Reference is made to the independent claims. Further embodiments are in the dependent claims.

Through multiplexing transmission of the SACCH frame of a subscriber and one or more TCH frames of other subscribers, the SACCH frames of the subscribers are staggered during transmission. This ensures normal transmission of the SACCH signaling of all subscribers and reduces the effect on the voice quality.

### BRIEF DESCRIPTION OF THE DRAWINGS

FIG. 1 shows a schematic diagram of the MUROS solution of the current technology;
FIG 2 shows a structure of the 26-frame multiframe when a single subscriber uses a full-rate channel in the current technology;
FIG 3 shows a structure of the 26-frame multiframe when each of two subscribers uses a half-rate channel in the current technology;
FIG 4 shows a flowchart of a downlink multiframe transmission provided in an embodiment of the present invention;
FIG. 5 shows a schematic diagram of a downlink multiframe transmission method provided in the first embodiment of the present invention;
FIG. 6 shows a schematic diagram of a downlink multiframe transmission method provided in the second embodiment of the present invention;
FIG. 7 shows a structure of a device for controlling transmission of the downlink multiframe transmission provided in an embodiment of the present invention; and
FIG. 8 shows a structure of a UE for receiving the downlink multiframe provided in an embodiment of the present invention.

### DETAILED DESCRIPTION OF THE EMBODIMENTS

The present invention provides a new solution for transmitting the 26-frame multiframe. This solution solves the problem wherein when the frames of multiple (for example, two) subscribers multiplex a half-rate channel (that is, the frames of four subscribers multiplex a full-rate channel), the downlink SACCH frames among the 26 frames are insufficient for the four subscribers.

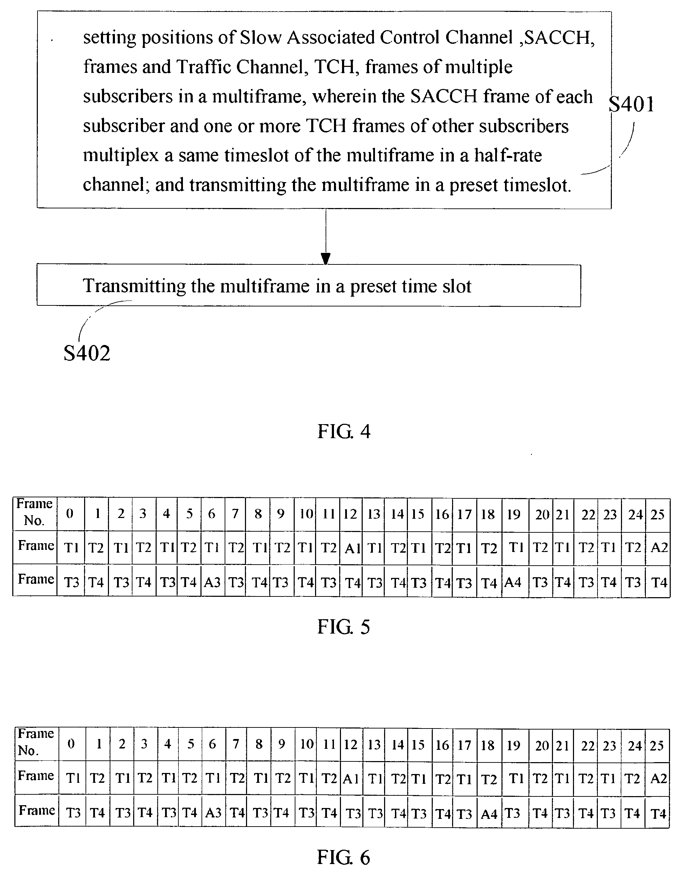

FIG. 4 shows a flowchart of the method for transmitting the downlink multiframe in an embodiment of the present invention. The transmission flow includes:
S401: The positions of SACCH frames and TCH frames of multiple subscribers in the multiframe are set. The SACCH frame of each subscriber and one or more TCH frames of other subscribers multiplex a same timeslot of the multiframe in a half-rate channel.
S402: The multiframe is transmitted in the preset timeslot.

Therefore, SACCH frames of a subscriber and other subscribers with which the subscriber shares same timeslot are staggered during transmission. This not only ensures normal transmission of the SACCH signaling of each subscriber but also reduces the effect on the voice quality.

In addition, when the SACCH frame and the TCH frame are transmitted in same timeslot, different transmit powers may be used to transmit the SACCH frame and TCH frame respectively.

Preferably, the transmit power for the SACCH frame is greater than the transmit power for the TCH frame with which the SACCH frames share a same timeslot of the multiframe in a half-rate channel. Transmitting the SACCH frame in a greater power ensures the signaling of the SACCH frame can be received correctly.

The following provides details about embodiments of the present invention based on the structure of the multiframe.

### Embodiment 1

It is assumed that the frames of subscribers MS1 and MS3 share a half-rate channel, and the frames of subscribers MS2 an MS4 share the other half-rate channel. That is, the frames of four subscribers share a full-rate channel.

FIG 5 shows a schematic diagram of the first embodiment. In the figure, T1 is the TCH frame of MS1; T2 is the TCH frame of MS2; T3 is the TCH frame of MS3; T4 is the TCH frame of MS4. A1 is the SACCH frame of MS1; A2 is the SACCH frame of MS2; A3 is the SACCH frame of MS3; A4 is the SACCH frame of MS4.

The SACCH frame of MS1 is still transmitted in frame 12, and the SACCH frame of MS3 is transmitted in frame 6. In this case, the SACCH frame of MS1 and the TCH frame of MS4 are transmitted by multiplexing frame 12. In addition, the powers for the SACCH frame of MS1 and the TCH frame of MS4 may be set to be different; preferably, the SACCH frame of MS1 has a greater transmit power to ensure that the signaling of the SACCH frame can be received correctly. Similarly, the SACCH frame of MS3 and the TCH frame of MS1 are transmitted by multiplexing frame 6. In addition, the powers for the SACCH frame of MS3 and the TCH frame of MS1 may be set to be different; preferably, the SACCH frame of MS1 has a greater transmit power to ensure that the signaling of the SACCH frame can be received correctly.

The SACCH frame of MS2 is still transmitted in frame 25, and the SACCH frame of MS4 is transmitted in frame 19.

Note that it is only an example in FIG 5 that A3 is transmitted in frame 6, A4 in frame 19 to ensure even transmission of SACCH frames. The SACCH frames are transmitted in other frame numbers as long as the SACCH frames of all subscribers are transmitted in different frame numbers. When an SACCH frame and a TCH frame are transmitted in same timeslot, the SACCH frame has a greater transmit power to ensure transmitting the SACCH frame correctly, which affects the TCH frame and those adjacent to the TCH frame. When the SACCH frames are staggered during transmission, the SACCH frames can be positioned evenly to separate TCH frames that are affected, which reduces the effect on the voice quality.

The present invention provides a new solution for transmitting the 26-frame multiframe. This solution implements staggered transmission of SACCH frames of multiple (for example, two) subscribers sharing a half-rate channel, and solves the problem wherein the downlink SACCH frames among the 26 frames are insufficient for the four subscribers whose frames share two half-rate channels. It ensures correct transmission of SACCH frames and reduces the effect on the voice quality.

### Embodiment 2

It is assumed that the frames of subscribers MS1 and MS3 share a half-rate channel, and the frames of subscribers MS2 an MS4 share the other half-rate channel. That is, the frames of four subscribers share a full-rate channel.

FIG. 6 shows a schematic diagram of the second embodiment. In the figure, T1 is the TCH frame of MS1; T2 is the TCH frame of MS2; T3 is the TCH frame of MS3; T4 is the TCH frame of MS4. A1 is the SACCH frame of MS1; A2 is the SACCH frame of MS2; A3 is the SACCH frame of MS3; A4 is the SACCH frame of MS4.

The SACCH frame of MS1 is still transmitted in frame 12, and the SACCH frame of MS3 is transmitted in frame 6. Similarly, the SACCH frame of MS1 and the TCH frame of MS3 are transmitted by multiplexing frame 12. Preferably, the powers for the SACCH frame of MS1 and the TCH frame of MS3 are set to be different; and, the SACCH frame of MS1 has a greater transmit power to ensure that the signaling of the SACCH frame can be received correctly. Similarly, the SACCH frame of MS3 and the TCH frame of MS1 are transmitted by multiplexing frame 6. Preferably, the powers for the SACCH frame of MS3 and the TCH frame of MS1 are set to be different; and, the SACCH frame of MS3 has a greater transmit power to ensure that the signaling of the SACCH frame can be received correctly.

The SACCH frame of MS2 is transmitted in frame 25, and the SACCH frame of MS4 is transmitted in frame 18.

The positions of the SACCH frames and TCH frames of all subscribers in the second embodiment are different from those in the first embodiment.
(1) The TCH frame of MS1 always shares a same timeslot with the TCH frame of MS3, and the TCH frame of MS2 always shares a same timeslot with the TCH frame of MS4. That is, the TCH frame of a subscriber always shares a same timeslot with another identical subscriber in the multiframe.
   For details, see FIG. 6. Compared with FIG. 5, the positions of the TCH frames of MS3 and MS4 are adjusted in FIG. 6, which ensures that the TCH frame of MS1 always multiplex a same timeslot with the TCH frame of MS3, and the TCH frame of MS2 always multiplex a same timeslot with the TCH frame of MS4. This improves the stability of multiplexing subscribers; and/or,
(2) The SACCH frames of all subscribers multiplex a same timeslot with the TCH frames of all subscribers. This balances for each subscriber the interference of the SACCH frames on the TCH frames.

When the SACCH frame of a subscriber multiplex a same timeslot along with the TCH frames of other subscribers, the transmit power of the SACCH frame is greater than that of the TCH frame, which causes interference on the TCH frame. To solve the problem, the positions of the TCH frames and SACCH frames of MS3 and MS4 are adjusted in the second embodiment so that the four SACCH frames multiplex a same timeslot with the four TCH frames of four subscribers respectively.

In the first embodiment, A1 multiplex the same timeslot with T4, A2 with T4, A3 with T1, and A4 with T1. Therefore, the SACCH frames have interference only on T1 and T4 (TCH frames of MS1 and MS4). In the second embodiment, A1 multiplex the same timeslot with T3, A2 with T4, A3 with T1, and A4 with T2. Therefore, the four SACCH frames have interference respectively on the TCH frames of four subscribers. In this case, compared with the first embodiment, the interference on TCH frames in the second embodiment is more balanced, which further reduces the effect on the voice quality.

The technical solution of the present invention is applicable to the scenario in which the frames of multiple subscribers share a half-rate channel. The preceding embodiments take the scenario in which the frames of two subscribers share a half-rate channel or the frames of four subscribers share a full-rate channel as an example to describe the technical solution of the present invention. The solution for the scenario in which the frames of multiple subscribers in a half-rate channel is similar to the preceding scenario, and therefore is not described here. When multiple subscribers the same timeslot, namely, the SACCH frames of different subscribers are transmitted by multiplexing different timeslots, the SACCH frames of different subscribers are staggered during transmission, which ensures transmission of SACCH frames and reduces the effect on the voice quality.

A device for controlling transmission of the downlink multiframe is provided in an embodiment of the present invention. Adapted to implement MUROS of half-rate channels, the device can be a base station device or a functional entity within the base station device. The device can be implemented by software, hardware, or combination of software and hardware.

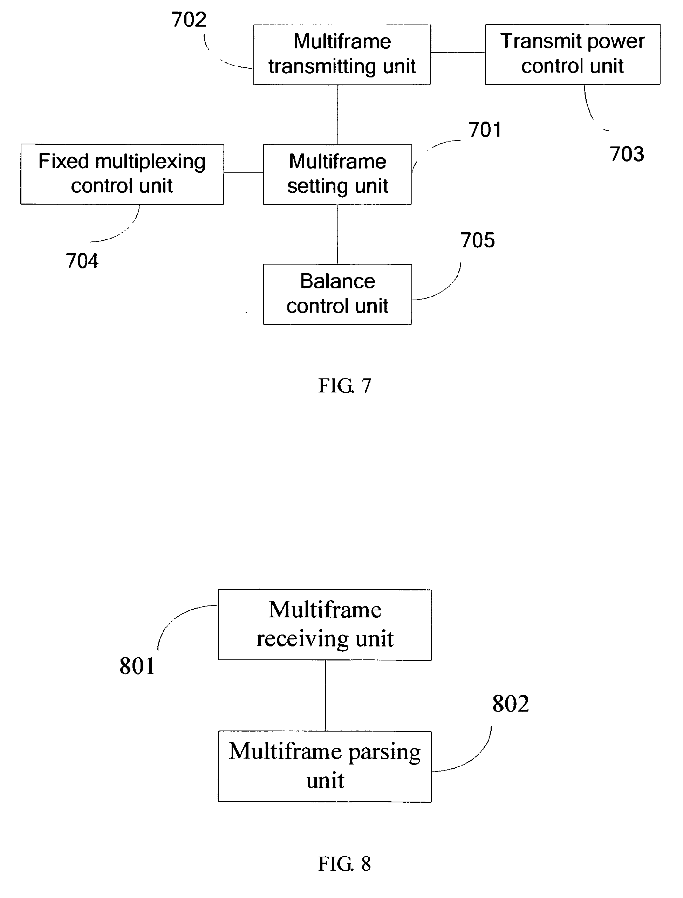

FIG 7 shows a structure of the inside of the device for controlling the downlink multiframe. The device includes:
a multiframe setting unit701, adapted to set positions of Slow Associated Control Channel ,SACCH, frames and Traffic Channel, TCH, frames of multiple subscribers in a multiframe, wherein the SACCH frame of each subscriber and one or more TCH frames of other subscribers multiplex a same timeslot of the multiframe in a half-rate channel; and
a multiframe transmitting unit702, adapted to transmit the multiframe in a preset timeslot.

Preferably, the device further includes:
a transmit power control unit703, adapted to control the transmit powers so that the transmit power of the SACCH frame is greater than the transmit power of the TCH frame to which is transmitted in a same timeslot with the SACCH frame

Alternatively, the transmit power control unit 703 is adapted to control the transmit powers so that the transmit powers of the SACCH frame and of the TCH frame are different during transmission when the SACCH frame and the TCH frame are transmitted in a same timeslot.

Further, in the example in which the multiple subscribers comprise two subscribers, the device may further include:
a fixed multiplexing control unit 704, adapted to adjust the positions of the SACCH frames and TCH frames of each subscriber, so that TCH frame of the first subscriber always shares a same timeslot with TCH frame of the second subscriber.

Optionally, the device may further include:
a balance control unit 705, adapted to adjust the positions of the SACCH frames and TCH frames of each subscriber so that the SACCH frames of all subscribers multiplex same timeslot with TCH frames of all subscribers..

Note that the implementation of controlling the downlink multiframe is similar to the implementation described in the preceding embodiments, and therefore is not described here.

A device for receiving the downlink multiframe is provided in an embodiment of the present invention. The device can be a UE or a functional entity within a UE. The device can be implemented by software, hardware, or combination of software and hardware.

FIG 8 shows a structure of the inside of the device for receiving the downlink multiframe. The device includes:
a multiframe receiving unit 801, adapted to receive the multiframe in the preset timeslot; and
a multiframe parsing unit 802, adapted to parse the multiframe to obtain the SACCH frame and TCH frame of the UE, wherein the SACCH frame of the UE shares a same timeslot of half-rate channel with one or more TCH frames of other UEs.

By transmitting the SACCH frame of a subscriber and one or more TCH frames of other subscribers in same timeslot, the SACCH frames of all subscribers are staggered during transmission. This ensures normal transmission of the SACCH signaling of all subscribers and reduces the effect on the voice quality.

Preferably, when the SACCH frame of a subscriber shares a same timeslot with one or more TCH frames of other subscribers, the powers of the two frames must be different; that is, the SACCH frame has a greater transmit power than the TCH frame to ensure that the signaling of the SACCH frame can be received correctly.

In addition, The TCH frame of the first subscriber always shares a same timeslot with TCH frame of the second subscriber. This ensures that the TCH frame of a subscriber always shares a same timeslot with another identical subscriber in the multiframe and improves the stability of the multiplexing subscribers.

All SACCH frames multiplex a same timeslot with the TCH frames of all subscribers. This balances for each subscriber the interference of the SACCH frames on the TCH frames, and reduces the effect on the voice quality.

A system for transmitting the downlink multiframe is provided in an embodiment of the present invention. The system includes:
a device for controlling transmission of the downlink multiframe, adapted to set positions of Slow Associated Control Channel ,SACCH, frames and Traffic Channel, TCH, frames of multiple subscribers in a multiframe, wherein the SACCH frame of each subscriber and one or more TCH frames of other subscribers multiplex a same timeslot of the multiframe in a half-rate channel; and transmit the multiframe in a preset timeslot; and
a User Equipment (UE) for receiving the downlink multiframe, adapted to receive the downlink multiframe in the preset timeslot; and parse the downlink multiframe to obtain SACCH frame and TCH frame of the UE.

It is understandable to those skilled in the art that all or part of the steps in the foregoing embodiments may be performed through hardware instructed by a program. The program may be stored in a computer-readable storage medium such as ROM/RAM, magnetic disk, and compact disk.

Details above are only a preferable method of the present invention.

## Claims

1. A method for transmitting a downlink multiframe when the frames of multiple subscribers multiplex a half rate channel, **characterized by**, comprising:
setting (S401) positions of Slow Associated Control Channel, SACCH, frames and Traffic Channel, TCH, frames of multiple subscribers in a multiframe, wherein the SACCH frame of each subscriber and one or more TCH frames of other subscribers multiplex a same timeslot in which the multiframe is transmitted in a half-rate channel; and
transmitting (S402) the multiframe in a preset timeslot.

2. The method according to claim 1, further comprising:
when the SACCH frame and the TCH frame are multiplexedly transmitted, using different transmit powers to transmit the SACCH frame and the TCH frame respectively.

3. The method according to claim 2, wherein a transmit power of the SACCH frame is greater than a transmit power of the TCH frame which is multiplexed with the SACCH frame.

4. The method according to any one of claims 1, 2, and 3, wherein the multiple subscribers comprise two subscribers, namely, a first subscriber and a second subscriber;
the method further comprises:
adjusting the positions of the SACCH frame and the TCH frame of each subscriber so that TCH frame of the first subscriber is set to be multiplexed with the TCH frame of the second subscriber.

5. The method according to any one of claims 1, 2, and 3, further comprising:
adjusting the positions of the SACCH frames and TCH frames of each subscriber so that the SACCH frames of all subscribers are respectively multiplexed with TCH frames of all subscribers so that interference of the SACCH frames on the TCH frame is balanced for each subscriber.

6. A device for controlling transmission of a downlink multiframe when the frames of multiple subscribers multiplex a half rate channel, **characterized by**, comprising:
a multiframe setting unit (701), adapted to set positions of Slow Associated Control Channel, SACCH, frames and Traffic Channel, TCH, frames of multiple subscribers in a multiframe, wherein the SACCH frame of each subscriber and one or more TCH frames of other subscribers multiplex a same timeslot in which the multiframe is transmitted in a half-rate channel; and
a multiframe transmitting unit (702), adapted to transmit the multiframe in a preset timeslot.

7. The device according to claim 6, further comprising:
a transmit power control unit (703), adapted to control transmit powers so that transmit powers of the SACCH frame and of the TCH frame are different when the SACCH frame and the TCH frame are multiplexedly transmitted.

8. The device according to claim 6, further comprising:
a transmit power control unit (703), adapted to control transmit powers so that transmit power of the SACCH frame is greater than transmit power of the TCH frame which is multiplexed with the SACCH frame.

9. The device according to any one of claims 6, 7, and 8, wherein the multiple subscribers comprise two subscribers, namely, a first subscriber and a second subscriber;
the device further comprises:
a fixed multiplexing control unit (704), adapted to adjust the positions of the SACCH frame and the TCH frame of each subscriber, so that TCH frame of the first subscriber is set to be multiplexed with TCH frame of the second subscriber.

10. The device according to any one of claims 6, 7, and 8, further comprising:
a balance control unit (705), adapted to adjust the positions of the SACCH frames and TCH frames of each subscriber so that the TCH frame of each subscriber are multiplexed with the SACCH frame of other subscriber.

11. The device according to any one of claims 6, 7, and 8, wherein the device is a base station device or a functional entity within a base station device.

12. A user equipment, UE, for receiving a downlink multiframe when the frames of multiple subscribers multiplex a half rate channel, **characterized by** comprising:
a multiframe receiving unit(801), adapted to receive the downlink multiframe in a preset timeslot; and
a multiframe parsing unit(802), adapted to parse the downlink multiframe to obtain a Slow Associated Control Channel , SACCH, frame and Traffic Channel ,TCH, frame of the UE, wherein the SACCH frame are multiplexed in a same timeslot of a half-rate channel with one or more TCH frames of other UEs.

13. A system for transmitting a downlink multiframe when the frames of multiple subscribers multiplex a half rate channel, **characterized by** comprising:
a device for controlling transmission of the downlink multiframe, adapted to set positions of the Slow Associated Control Channel, SACCH, frames and Traffic Channel, TCH, frames of multiple subscribers in a multiframe, wherein the SACCH frame of each subscriber and one or more TCH frames of other subscribers multiplex a same timeslot in which the multiframe is transmitted in a half-rate channel; and transmit the multiframe in a preset timeslot; and
a user equipment, UE, for receiving the downlink multiframe, adapted to receive the downlink multiframe in the preset timeslot; and parse the downlink multiframe to obtain SACCH frame and TCH frame of the UE.

14. A program which when run instructs hardware to perform the method according to any of claims 1-5.

15. A computer-readable storage medium storing a program which when run instructs hardware to perform the method according to any of claims 1-5.

## Patentansprüche

1. Verfahren zum Übertragen eines Abwärtsstrecken-Mehrfachrahmens, wenn die Rahmen von mehreren Teilnehmern einen Half-Rate-Kanal multiplexen, **dadurch gekennzeichnet, dass** es die folgenden Schritte umfasst:
Festlegen (S401) von Positionen von "Slow Associated Control Channel" (SACCH)-Rahmen und "Traffic Channel" (TCH)-Rahmen von mehreren Teilnehmern in einem Mehrfachrahmen, wobei der SACCH-Rahmen von jedem Teilnehmer und einer oder mehrere TCH-Rahmen von anderen Teilnehmern einen selben Zeitschlitz multiplexen, in dem der Mehrfachrahmen in einem Half-Rate-Kanal übertragen wird; und
Übertragen (S402) des Mehlfachrahmens in einem voreingestellten Zeitschlitz.

2. Verfahren nach Anspruch 1, das ferner aufweist:
wenn der SACCH-Rahmen und der TCH-Rahmen gemultiplext übertragen werden, Verwenden von unterschiedlichen Übertragungsleistungen, um den SACCH-Rahmen bzw. den TCH-Rahmen zu übertragen.

3. Verfahren nach Anspruch 2, wobei eine Übertragungsleistung des SACCH-Rahmens größer als eine Übertragungsleistung des TCH-Rahmens ist, der mit dem SACCH-Rahmen gemultiplext wird.

4. Verfahren nach einem der Ansprüche 1, 2, und 3, wobei die mehreren Teilnehmer zwei Teilnehmer umfassen, nämlich einen ersten Teilnehmer und einen zweiten Teilnehmer; und das Verfahren ferner aufweist:
Einstellen der Positionen des SACCH-Rahmens und des TCH-Rahmens von jedem Teilnehmer, so dass der TCH-Rahmen des ersten Teilnehmers so festgelegt wird, dass er mit dem TCH-Rahmen des zweiten Teilnehmers gemultiplext wird.

5. Verfahren nach einem der Ansprüche 1, 2 und 3, das ferner aufweist:
Einstellen der Positionen der SACCH-Rahmen und der TCH-Rahmen von jedem Teilnehmer, so dass die SACCH-Rahmen von allen Teilnehmern jeweils mit TCH-Rahmen von allen Teilnehmern so gemultiplext werden, dass eine Beeinflussung durch den SACCH-Rahmen des TCH-Rahmens für jeden Teilnehmer ausgeglichen wird.

6. Vorrichtung zur Steuerung der Übertragung eines Abwärtsstrecken-Mehrfachrahmens, wenn die Rahmen von mehreren Teilnehmern einen Half-Rate-Kanal multiplexen, **dadurch gekennzeichnet, dass** sie Folgendes umfasst:
eine Mehrfachrahmen-Festlegungseinheit (701), die eingerichtet ist, Positionen von "Slow Associated Control Channel" (SACCH)-Rahmen und "Traffic Channel" (TCH)-Rahmen von mehreren Teilnehmern in einem Mehrfachrahmen festzulegen, wobei der SACCH-Rahmen von jedem Teilnehmer und einer oder mehrere TCH-Rahmen von anderen Teilnehmern einen selben Zeitschlitz multiplexen, in dem der Mehrfachrahmen in einem Half-Rate-Kanal übertragen wird; und
eine Mehrfachrahmen-Übertragungseinheit (702), die eingerichtet ist, den Mehrfachrahmen in einem voreingestellten Zeitschlitz zu übertragen.

7. Vorrichtung nach Anspruch 6, die ferner aufweist:
eine Übertragungsleistungs-Steuereinheit (703), die eingerichtet ist, Übertragungsleistungen so zu steuern, dass sich Übertragungsleistungen des SACCH-Rahmens und des TCH-Rahmens unterscheiden, wenn der SACCH-Rahmen und der TCH-Rahmen gemultiplext übertragen werden.

8. Vorrichtung nach Anspruch 6, die ferner aufweist:
eine Übertragungsleistungs-Steuereinheit (703), die eingerichtet ist, Übertragungsleistungen so zu steuern, dass die Übertragungsleistung des SACCH-Rahmens größer als die Übertragungsleistung des TCH-Rahmens ist, der mit dem SACCH-Rahmen gemultiplext wird.

9. Vorrichtung nach einem der Ansprüche 6, 7, und 8, wobei die mehreren Teilnehmer zwei Teilnehmer umfassen, nämlich einen ersten Teilnehmer und einen zweiten Teilnehmer;
und die Vorrichtung ferner aufweist:
eine feste Multiplexing-Steuereinheit (704), die eingerichtet ist, die Positionen des SACCH-Rahmens und des TCH-Rahmens von jedem Teilnehmer so einzustellen, dass der TCH-Rahmen des ersten Teilnehmers so festgelegt wird, dass er mit dem TCH-Rahmen des zweiten Teilnehmers gemultiplext wird.

10. Vorrichtung nach einem der Ansprüche 6, 7 und 8, die ferner aufweist:
eine Ausgleichssteuereinheit (705), die eingerichtet ist, die Positionen der SACCH-Rahmen und der TCH-Rahmen von jedem Teilnehmer so einzustellen, dass der TCH-Rahmen von jedem Teilnehmer mit dem SACCH-Rahmen eines anderen Teilnehmers gemultiplext wird.

11. Vorrichtung nach einem der Ansprüche 6, 7 und 8, wobei die Vorrichtung eine Basisstationsvorrichtung oder eine Funktionsentität innerhalb einer Basisstationsvorrichtung ist.

12. Benutzereinrichtung (UE) zum Empfangen eines Abwärtsstrecken-Mehrfachrahmens, wenn die Rahmen von mehreren Teilnehmern einen Half-Rate-Kanal multiplexen, **dadurch gekennzeichnet, dass** sie Folgendes umfasst:
eine Mehrfachrahmen-Empfangseinheit (801), die eingerichtet ist, den Abwärtsstrecken-Mehrfachrahmen in einem voreingestellten Zeitschlitz zu empfangen; und
eine Mehrfachrahmen-Parsingeinheit (802), die eingerichtet ist, den Abwärtsstrecken-Mehrfachrahmen zu parsen, um einen "Slow Associated Control Channel" (SACCH)-Rahmen und einen "Traffic Channel" (TCH)-Rahmen der UE zu erhalten, wobei der SACCH-Rahmen in einem selben Zeitschlitz eines Half-Rate-Kanals mit einem oder mehreren TCH-Rahmen von anderen UE gemultiplext wird.

13. System zum Übertragen eines Abwärtsstrecken-Mehrfachrahmens, wenn die Rahmen von mehreren Teilnehmern einen Half-Rate-Kanal multiplexen, **dadurch gekennzeichnet, dass** es Folgendes umfasst:
eine Vorrichtung zum Steuern der Übertragung des Abwärtsstrecken-Mehrfachrahmens, die eingerichtet ist, Positionen der "Slow Associated Control Channel" (SACCH)-Rahmen und der "Traffic Channel" (TCH)-Rahmen von mehreren Teilnehmern in einem Mehrfachrahmen festzulegen, wobei der SACCH-Rahmen von jedem Teilnehmer und einer oder mehrere TCH-Rahmen von anderen Teilnehmern einen selben Zeitschlitz, in dem der Mehrfachrahmen übertragen wird, in einem Half-Rate-Kanal multiplexen; und den Mehrfachrahmen in einem voreingestellten Zeitschlitz übertragen; und
eine Benutzereinrichtung (UE) zum Empfangen des Abwärtsstrecken-Mehrfachrahmens, die eingerichtet ist, den Abwärtsstrecken-Mehrfachrahmen in einem voreingestellten Zeitschlitz zu empfangen; und den Abwärtsstrecken-Mehrfachrahmen zu parsen, um einen SACCH-Rahmen und TCH-Rahmen des UE zu erhalten.

14. Programm, das, wenn es ausgeführt wird, einer Hardware befiehlt, das Verfahren nach einem der Ansprüche 1 bis 5 auszuführen.

15. Computerlesbares Speichermedium, das ein Programm speichert, das, wenn es ausgeführt wird, einer Hardware befiehlt, das Verfahren nach einem der Ansprüche 1 bis 5 auszuführen.

## Revendications

1. Procédé de transmission d'une multitrame de liaison descendante quand les trames de multiples abonnés multiplexent un canal demi-débit, **caractérisé en ce qu'**il comprend
le réglage (S401) de positions de trames de canal de commande associé lent, SACCH, et de trames de canal de trafic, TCH, de multiples abonnés dans une multitrame, dans lequel la trame SACCH de chaque abonné et une ou plusieurs trames TCH d'autres abonnés multiplexent une même tranche de temps dans laquelle la multitrame est transmise dans un canal demi-débit ; et
la transmission (S402) de la multitrame dans une tranche de temps préétablie.

2. Procédé selon la revendication 1, comprenant en outre :
quand la trame SACCH et la trame TCH sont transmises multiplexées, l'utilisation de différentes puissances de transmission pour transmettre respectivement la trame SACCH et la trame TCH.

3. Procédé selon la revendication 2, dans lequel une puissance de transmission de la trame SACCH est supérieure à une puissance de transmission de la trame TCH qui est multiplexée avec la trame SACCH.

4. Procédé selon l'une quelconque des revendications 1, 2 et 3, dans lequel les multiples abonnés comprennent deux abonnés, à savoir un premier abonné et un second abonné ;
le procédé comprend en outre :
l'ajustement des positions de la trame SACCH et de la trame TCH de chaque abonné de telle sorte que la trame TCH du premier abonné soit réglée pour être multiplexée avec la trame TCH du second abonné.

5. Procédé selon l'une quelconque des revendications 1, 2 et 3, comprenant en outre :
l'ajustement des positions des trames SACCH et des trames TCH de chaque abonné de telle sorte que les trames SACCH de tous les abonnés soient respectivement multiplexées avec les trames TCH de tous les abonnés de manière à ce que le brouillage des trames SACCH sur la trame TCH soit équilibré pour chaque abonné.

6. Dispositif de commande de la transmission d'une multitrame de liaison descendante quand les trames de multiples abonnés multiplexent un canal demi-débit, **caractérisé en ce qu'**il comprend :
une unité de réglage de multitrame (701), adaptée pour régler des positions de trames de canal de commande associé lent, SACCH, et de trames de canal de trafic, TCH, de multiples abonnés dans une multitrame, dans lequel la trame SACCH de chaque abonné et une ou plusieurs trames TCH d'autres abonnés multiplexent une même tranche de temps dans laquelle la multitrame est transmise dans un canal demi-débit ; et
une unité de transmission de multitrame (702), adaptée pour transmettre la multitrame dans une tranche de temps préétablie.

7. Dispositif selon la revendication 6, comprenant en outre :
une unité de commande de puissance de transmission (703) adaptée pour commander des puissances de transmission de manière à ce que les puissances de transmission de la trame SACCH et de la trame TCH soient différentes quand la trame SACCH et la trame TCH sont transmises multiplexées.

8. Dispositif selon la revendication 6, comprenant en outre :
une unité de commande de puissance de transmission (703) adaptée pour commander des puissances de transmission de telle sorte que la puissance de transmission de la trame SACCH soit supérieure à la puissance de transmission de la trame TCH qui est multiplexée avec la trame SACCH.

9. Dispositif selon l'une quelconque des revendications 6, 7 et 8, dans lequel les multiples abonnés comprennent deux abonnés, à savoir un premier abonné et un second abonné ;
le dispositif comprend en outre :
une unité de commande de multiplexage fixe (704), adaptée pour ajuster les positions de la trame SACCH et de la trame TCH de chaque abonné de telle sorte que la trame TCH du premier abonné soit réglée pour être multiplexée avec la trame TCH du second abonné.

10. Dispositif selon l'une quelconque des revendications 6, 7 et 8, comprenant en outre :
une unité de commande d'équilibrage (705), adaptée pour ajuster les positions des trames SACCH et des trames TCH de chaque abonné de telle sorte que la trame TCH de chaque abonné soit multiplexée avec la trame SACCH d'un autre abonné.

11. Dispositif selon l'une quelconque des revendications 6, 7 et 8, le dispositif étant un dispositif de station de base ou une entité fonctionnelle dans un dispositif de station de base.

12. Équipement utilisateur, UE, destiné à recevoir une multitrame de liaison descendante quand les trames de multiples abonnés multiplexent un canal demi-débit, **caractérisé en ce qu'**il comprend:
une unité de réception de multitrame (801), adaptée pour recevoir la multitrame de liaison descendante dans une tranche de temps préétablie ; et
une unité d'analyse syntaxique de multitrame (802), adaptée pour analyser syntaxiquement la multitrame de liaison descendante pour obtenir une trame de canal de commande associé lent, SACCH, et une trame de canal de trafic, TCH, de l'équipement UE, dans lequel la trame SACCH est multiplexée dans une même tranche de temps d'un canal demi-débit avec une ou plusieurs trames TCH d'autres équipements UE.

13. Système de transmission d'une multitrame de liaison descendante quand les trames de multiples abonnés multiplexent un canal demi-débit, **caractérisé en ce qu'**il comprend
un dispositif de commande de la transmission de la multitrame de liaison descendante, adapté pour régler des positions des trames de canal de commande associé lent, SACCH, et des trames de canal de trafic, TCH, de multiples abonnés dans une multitrame, dans lequel la trame SACCH de chaque abonné et une ou plusieurs trames TCH d'autres abonnés multiplexent une même tranche de temps dans laquelle la multitrame est transmise dans un canal demi-débit ; et transmettre la multitrame dans une tranche de temps préétablie ; et
un équipement utilisateur, UE destiné à recevoir la multitrame de liaison descendante, adapté pour recevoir la multitrame de liaison descendante dans la tranche de temps préétablie ; et analyser syntaxiquement la multitrame de liaison descendante pour obtenir une trame SACCH et une trame TCH de l'équipement UE.

14. Programme qui, à son exécution, donne pour instruction à un matériel d'exécuter le procédé selon l'une quelconque des revendications 1 à 5.

15. Support de mémorisation lisible par ordinateur qui mémorise un programme qui, à son exécution, donne pour instruction à un matériel d'exécuter le procédé selon l'une quelconque des revendications 1 à 5.
